# EUROPÄISCHE PATENTSCHRIFT

(11) **EP 0 865 919 B1**
(45) Veröffentlichungstag und Bekanntmachung des Hinweises auf die Patenterteilung: **10.05.2000**
(21) Anmeldenummer: 98103206.3
(22) Anmeldetag: 24.02.1998
(51) Int. Cl.: B41F 33/00, B41F 27/12

(54) **Vorrichtung zum Abtasten und Biegen von Druckplatten**
Device for scanning and bending printing plates
Dispositif pour scanner et courber des plaques d'impression

(30) Priorität: 18.03.1997 US 820486
(43) Veröffentlichungstag der Anmeldung: 23.09.1998
(73) Patentinhaber: Heidelberger Druckmaschinen Aktiengesellschaft, 69115 Heidelberg (DE)
(72) Erfinder: Jones, Jackson Hacker, Rochester, NH 03867 (US); Murray, Robert Richard, Madbury, NH 03820 (US); Palmatier, Roland Thomas, Durham, NH 03824 (US)

(56) Entgegenhaltungen:
- EP-A- 0 095 606
- EP-A- 0 142 728
- DE-A- 4 228 904
- US-A- 5 454 247
- US-A- 5 542 002

## Beschreibung

Die vorliegende Erfindung betrifft generell Druckmaschinen und im besonderen Plattenbiegevorrichtungen und Scanner für Druckplatten in einer Druckmaschine.

Eine Offsetdruckmaschine weist normalerweise mindestens einen Plattenzylinder auf, auf dem eine Druckplatte befestigt wird. Für den Farbdruck wird gewöhnlich ein Originalbild in vier verschiedene Farben zerteilt (normalerweise in Schwarz, Magenta, Gelb und Cyan). Es werden vier diesen Farben entsprechende Druckplatten auf den Plattenzylindern in den hintereinander angeordneten Druckwerken der Druckmaschine plaziert. Beim Passieren eines Bogens oder einer Papierbahn durch die Reihe der Druckwerke werden die einzelnen Farben darauf gedruckt, was eine Reproduktion des Originalbildes ergibt.

Bevor eine Druckplatte auf den Plattenzylinder plaziert wird, wird sie normalerweise abgetastet, um die erforderliche Dichte zu erfassen, so daß während des Druckens die entsprechende Farbzufuhr auf die verschiedenen Druckplatten durch die Farbzonenschrauben der Farbkästen gesteuert werden kann. Die Farbzonenschrauben sind somit auf der Basis der erfaßten Dichte voreingestellt.

Um eine genaue Reproduktion des Farbbildes zu erhalten, müssen die Bilder der vier Druckplatten auf deren jeweiligem Plattenzylinder abgeglichen werden, so daß die jeweilige Farbe im richtigen Bereich auf den Bögen oder der Bahn erscheint, wenn diese die Druckwerke nacheinander passieren. Diese Bildabgleichung oder -ausrichtung ist als Registerhaltigkeit bekannt. Gewöhnlich weist die Druckplatte eine Biegung am als Vorderkante bekannten einen Ende und eine Biegung am als Hinterkante bekannten anderen Ende auf. Um die Druckplatte auf dem Plattenzylinder zu befestigen, wird deren Vorderkante gewöhnlich in den Klemmspalt des Plattenzylinders eingeführt. Dann wird die Platte um den Plattenzylinder gewunden, und deren Hinterkante durch den Klemmspalt geführt und am vorderen Federhaken und der Spannleiste befestigt. Die Platte wird dann durch die Spannleiste gespannt und somit auf dem Plattenzylinder fixiert.

Die Registerhaltigkeit sollte in beiden Richtungen, d. h. in umfänglicher und seitlicher oder axialer Richtung der Druckplatten genau sein. In der Regel kann die axiale Bewegung der Platte durch einen Register-Plattenanschlag auf dem Druckzylinder begrenzt werden, und zwar entweder durch einen Stift, an dem die Platte anschlägt, oder durch eine Kerbe in der Platte und einen auf dem Plattenzylinder fixierten Stift, der in die Kerbe der Platte eingreift. Die genaue Abgeglichenheit der Bilder auf den Druckplatten in axialer Richtung ist als Seitenmarkenregister bekannt.

Zur Erstellung eines genauen Umfangsregisters müssen die Relativpositionen der Klemmspalte der verschiedenen Plattenzylinder bekannt sein. Das sich auf der Platte befindliche Bild, das Registerzielmarken umfassen kann, wird dann gelesen und die jeweilige Platte wird an der geeigneten Stelle gebogen, um ein genaues Umfangsregister zu gewährleisten. Es können mittels einer Lochstanze Löcher in die Platte gestanzt werden, bevor das Biegen stattfindet, falls der Klemmechanismus solche Löcher erfordert.

Der Plattenbiegevorgang bedingt in einer Druckerei gewöhnlich ein eigenes Gerät. Der Scanner zur Erzeugung von Voreinstelldaten für das Setzen der Farbzonenschrauben ist ebenfalls ein eigenes Gerät. Diese beiden Geräte nehmen in der Druckerei oft viel Raum ein.

Die vorliegende Erfindung sieht eine Plattenabtast- und Plattenbiegevorrichtung vor, die folgende Merkmale umfaßt: ein Plattenbett zur Aufnahme einer Druckplatte, einen Plattentreiber zum Bewegen der Druckplatte entlang dem Plattenbett, mindestens einen über dem Plattenbett angeordneten Abtastsensor zum Abtasten der Dichte des sich auf der Druckplatte befindlichen Bildes, mindestens einen Registersensor zum Abtasten einer sich auf der Druckplatte befindlichen Registermarke, wobei das Plattenbett mindestens eine Auflageplatte an einer Seite und einen sich neben der Auflageplatte befindlichen Biegemechanismus zum Biegen der Druckplatte aufweist.

Die vorliegenden Erfindung sieht somit eine einzige kompakte, sowohl zum Abtasten als auch zum Biegen der Druckplatte konstruierte Einheit vor. Ein Teil der Seite des Plattenbettes des Scanners ist als Auflageplatte eines Biegemechanismus verfügbar.

Um die Größe der Abtast- und Biegevorrichtung weiter zu reduzieren, können bei der vorliegenden Erfindung in vorteilhafter Weise mindestens zwei Dichtesensoren verwendet werden, so daß jeder Scanner einen Teil der abzutastenden Platte abtasten kann. "Dichte" sollte als "Pixelbereich" oder "mit Farbe zu bedeckender Bereich" verstanden sein, d. h. der durch das Bild bedeckte Bereich, der sich innerhalb des einer bestimmten Farbzonenschraube entsprechenden Streifens der Druckplatte befindet. Der Dichtesensor umfaßt eine Lichtquelle (Photonstrahler), einen Lichtsensor (Photon-Elektronenumwandler) und ein Eichsystem zur Erstellung eines Elektronenwertes für von 0% bis 100% Bildbedeckung des gewissen Streifens, welcher der Dichte entspricht.

Ein Mikroprozessor ist ebenfalls vorgesehen, um die korrekte Biegestelle auf der Druckplatte zu bestimmen.

Ein Registerantriebsmechanismus kann die umfängliche und axiale Position eines jeden Plattenzylinders relativ zu den anderen Plattenzylindern messen und steuern und diese Information in den Mikroprozessor eingeben.

Die Vorteile und Merkmale der vorliegenden Erfindung werden in der folgenden Beschreibung bevorzugter Ausführungsbeispiele im Zusammenhang mit den beigefügten, nachstehend erklärten Zeichnungen näher erläutert.

Es zeigen:
- Fig. 1: eine schematische Darstellung einer Anordnung von Zylindern in einem Druckwerk;
- Fig. 2A: eine Draufsicht des Plattenbettes der Plattenabtast- und Plattenbiegevorrichtung der vorliegenden Erfindung;
- Fig. 2B: eine Seitenansicht der Plattenabtast- und Plattenbiegevorrichtung entlang der in Fig. 2A gezeigten Linie A - A;
- Fig. 3: eine Darstellung einer Druckplatte;
- Fig. 4: eine Endansicht der Plattenabtast- und Plattenbiegevorrichtung nach dem Biegen;
- Fig. 5: eine Darstellung eines weiteren Ausführungsbeispiels der vorliegenden Erfindung.

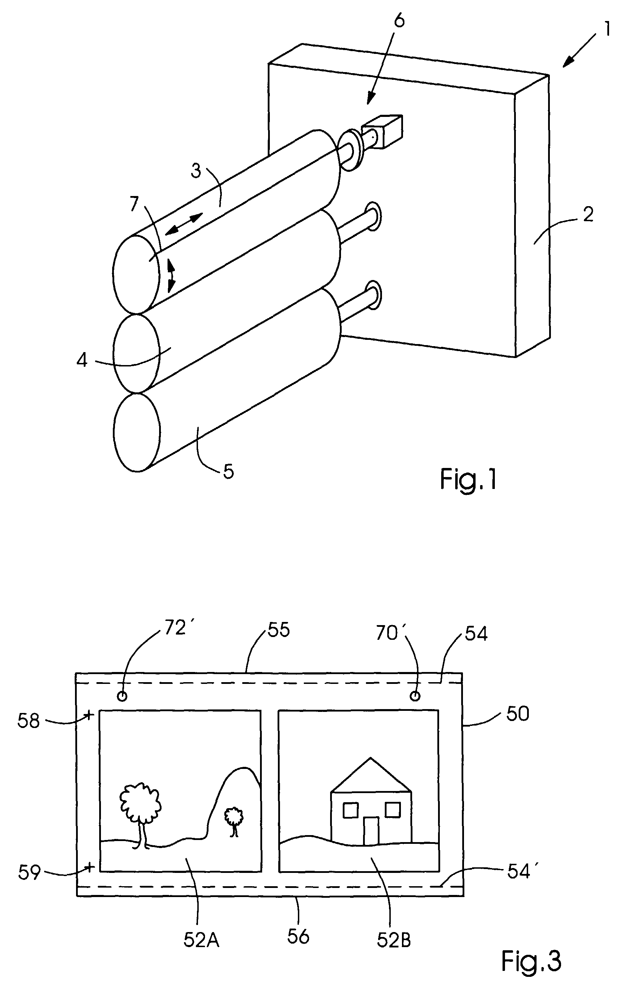

Fig. 1 ist eine schematische Darstellung einer Offsetdruckmaschine 1 mit mindestens einem Druckwerk 2. Jedes Druckwerk 2 umfaßt einen Plattenzylinder 3, einen Gummituchzylinder 4 und einen Gegendruckzylinder 5. Mit jedem Plattenzylinder 3 ist ein Registerantriebsmechanismus 6 verbunden, der die umfängliche und axiale Position des Plattenzylinders 3 relativ zu allen anderen Plattenzylindern in der Druckmaschine 1 lesen und einstellen kann, wie dies durch die Pfeile angedeutet ist. Der gezeigte Plattenzylinder 3 weist auf seiner Oberfläche einen sich axial erstreckenden Spalt 7 auf. Die Enden einer Druckplatte werden in den Spalt 7 eingeführt und darin befestigt, z. B. durch einen Klemmechanismus. Der Registerantriebsmechanismus 6 der Druckwerke 2 ist elektronisch mit der im folgenden beschriebenen Plattenabtast- und Plattenbiegevorrichtung verbunden.

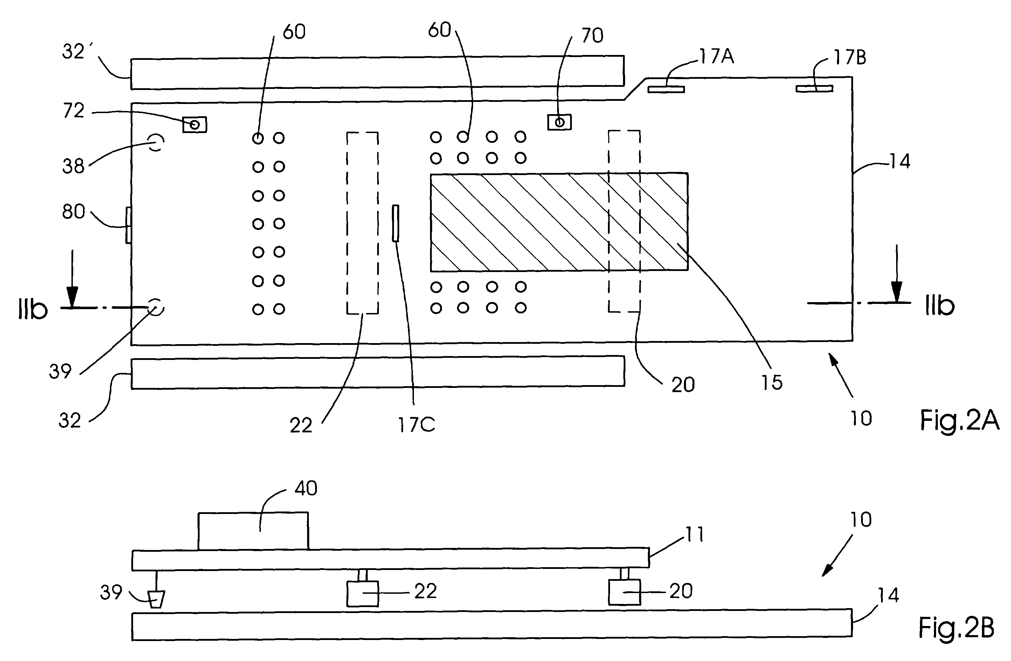

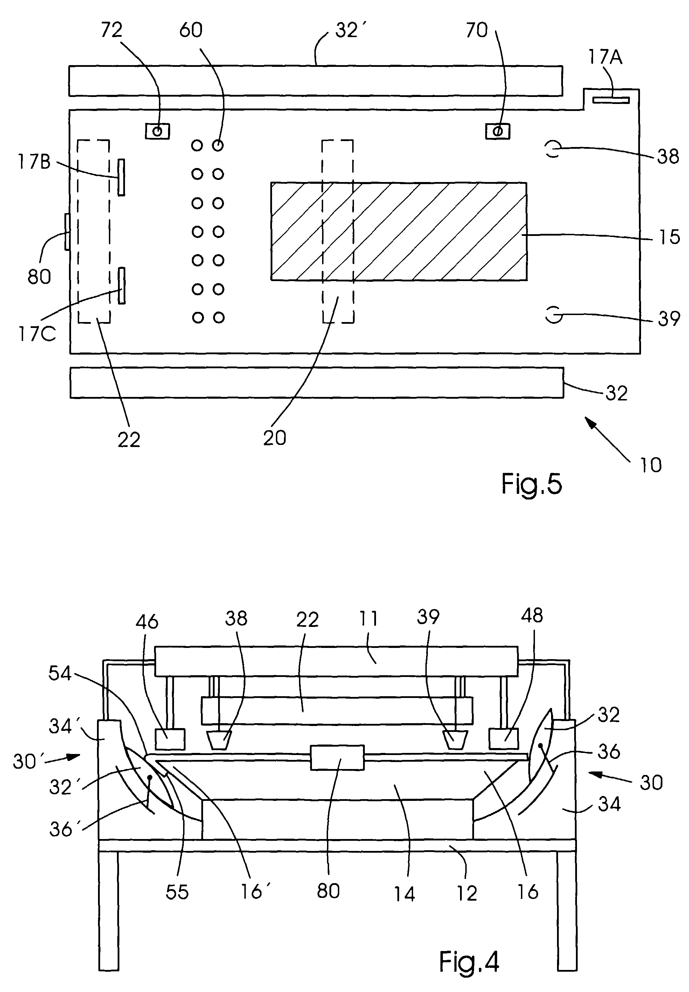

Die Fig. 2A und 2B zeigen eine vereinfachte Draufsicht und Seitenansicht einer Plattenabtast- und Plattenbiegevorrichtung 10, die ein Plattenbett 14 umfaßt, das durch einen in Fig. 4 gezeigten Rahmen gestützt ist. Ein Plattentreiber 15 kann ebenfalls innerhalb des Plattenbettes 14 angeordnet sein, um die Platte durch die Vorrichtung 10 zu transportieren. Der Treiber kann ein Riemen sein, wie in den Figuren dargestellt, oder auch getriebene Walzen oder Greiferfinger, oder es kann eine beliebige Einrichtung für die Bewegung der Platte relativ zum Plattenbett 14 sein. Es können auch Walzen auf der Platte plaziert sein, um die Bewegung zu erleichtern. Es sind drei Startanschläge 17A, 17B und 17C vorgesehen, die der Platte als Startposition dienen. Zumindest der Anschlag 17C ist mit einer Einzieheinrichtung verbunden und ist somit in das Plattenbett einziehbar oder zurückziehbar. Unter dem Plattenbett 14 kann sich auch eine Saugluftquelle befinden, die durch Löcher 60 im Plattenbett 14 auf die Platte wirkt, so daß diese fest auf dem Plattenbett 14 gehalten wird. Die Löcher können in einem gewissen Abstand voneinander über das gesamte Plattenbett 14 verteilt sein. Ein überhängend angeordneter Träger 11 hält zwei Abtastsensoren 20 und 22, mit denen eine Druckplatte bezüglich der Dichte abgetastet wird. Die Abtastsensoren können in zwei, drei oder vier Sätzen angeordnet sein, je nach der Gesamtzahl der Seiten, die aus Gründen der Geschwindigkeitseffizienz gleichzeitig abgetastet werden müssen.

Entlang den Seiten des Plattenbettes 14 befinden sich zwei Biegeschienen 32 und 32' zum Biegen des vorderen und des hinteren Endes einer Druckplatte, wie dies im folgenden mit Bezug auf Fig. 4 beschrieben wird.

Zwei bewegliche und einziehbare Stifte 70 und 72 befinden sich in Aussparungen des Plattenbettes 14 und greifen in die in der Druckplatte vorhandenen Löcher ein. Die Stifte werden durch einen x-y Stellmotor elektronisch gesteuert und haben in der Mitte der Aussparungen ihre Ausgangsstellung. Die Stifte 70, 72 bewegen sich zusammen auf der Ebene des Plattenbettes innerhalb ihrer jeweiligen Aussparung und können sich zusammen auch seitwärts oder vorwärts bewegen oder die Platte ein wenig drehen. Vom Mikroprozessor 40 werden den Stiften 70, 72 Steuerungsrichtungsbefehle übermittelt, um die Position der Druckplatte auf dem Plattenbett 14 zu steuern, nachdem die Stifte in die Druckplatte eingegriffen haben.

Die Abtast- und Biegevorrichtung umfaßt auch zwei Registersensoren 38, 39, die mit dem überhängenden Träger 11 verbunden sind, um die Position der Bilder auf der Druckplatte abzutasten, und zwar anhand von auf der Druckplatte angeordneten Registermarken. Die Registersensoren 38, 39 sind elektronisch mit einem Mikroprozessor 40 verbunden, der auch Inputs von den Registerantriebsmechanismen 6 der verschiedenen Plattenzylinder der Druckmaschine ermpfängt.

Ein letzter Anschlag 80 für die Druckplatte kann am Ende des Plattenbettes 14 angeordnet und nach unten drehbar oder einziehbar sein, so daß die Druckplatte mühelos entfernt werden kann.

Wie in Fig. 3 gezeigt, weist die Druckplatte 50 eine Hinterkante 55 und eine Vorderkante 56 auf. Die Druckplatte weist zwei Bildbereiche 52A und 52B und zwei Registermarken 58, 59 auf. Die Registermarken 58, 59 dienen der Identifizierung der Position der Bildbereiche 52A und 52B auf der Druckplatte und befinden sich in einem Abstand vom Bild. In Abhängigkeit vom Umfangsregister der verschiedenen Plattenzylinder in der Druckmaschine bestimmt der Mikroprozessor 40 die gewünschte Biegestelle 54 und 54' für die Hinterkante und Vorderkante der Druckplatte 50. Es werden zwei Löcher 70' und 72' in die Druckplatte 50 gestanzt, um das Zusammenwirken mit den einziehbaren Stiften 70 und 72 der Abtast- und Biegevorrichtung zu ermöglichen.

Fig. 4 zeigt eine Endansicht der Abtast- und Biegevorrichtung. Das Plattenbett wird durch einen Rahmen 12 gestützt. Am Ende ist das Plattenbett 14 mit abgewinkelten Rändern oder Auflageflächen 16 und 16' versehen, um welche die gebogenen Kanten der Druckplatte geformt werden können. Ein Biegemechanismus 30 umfaßt eine Biegeschiene 32, ein halbkreisförmiges Gehäuse 34 für die Biegeschiene 32 und ein Biegeschienen-Betätigungsorgan 36 zum Bewegen der Biegeschiene 32 innerhalb des Gehäuses 34. In gleicher Weise umfaßt der Biegemechanismus 30' eine Biegeschiene 32', ein halbkreisförmiges Gehäuse 34' für die Biegeschiene 30' und ein Biegeschienen-Betätigungsorgan 36' zum Bewegen der Biegeschiene 32' innerhalb des Gehäuses 34'.

Der überhängende Träger 11 hält den Abtastsensor 22 und die Registersensoren 38 und 39 und auch zwei Klemmleisten 46 und 48, die einziehbar sind und während des Biegevorgangs die Kanten der Druckplatte niederhalten können. Die überhängenden Träger können direkt auf den Biegeschienengehäusen, auf dem Rahmen oder anderweitig gelagert sein.

Die Plattenabtast- und Plattenbiegevorrichtung funktioniert wie folgt: In einer Vierfarben-Druckmaschine werden z. B. für ein Bild vier Druckplatten 50 verwendet, welche je eine Farbkomponente darstellen, nämlich Cyan, Magenta, Gelb und Schwarz. Jede Platte 50 wird der Plattenabtast- und Plattenbiegevorrichtung zugeführt. Durch den Bediener oder durch die auf der Druckplatte selbst angeordneten Marken kann identifiziert werden, welche Farbkomponente des Druckbildes die einzelne Druckplatte darstellt. Die Druckplatte 50 wird auf das Plattenbett 14 in eine Startposition bewegt, so daß diese an den Startstiften 17A, 17B und 17C positioniert ist. Diese Stifte 17A, 17B und 17C sind so angeordnet, daß wenn sich die Druckplatte 50 weiter entlang dem Plattenbett 14 bewegt, die Löcher 70' und 72' der Druckplatte 50 auf die sich in ihrer Ausgangsposition befindlichen Stifte 70 und 72 ausgerichtet sind.

Der Stift 17C wird dann eingezogen und der Plattentreiber 15 bewegt die Platte 50 entlang dem Plattenbett 14. Der Abtastsensor 20 beginnt mit dem Abtasten des ersten Bildes 52A zur Ermittlung der Dichte, und der Abtastsensor 22 tastet das zweite Bild 52B ab. Diese Dichteinformation kann dann in einen automatischen Steuerungsmechanismus für die Farbzonenschrauben der Farbkästen eingegeben werden, um diese entsprechend auf die Farbzufuhr zum relevanten Plattenzylinder, auf dem die Druckplatte 50 während des Druckens eingefärbt werden muß, einzustellen.

Die Druckplatte 50 wird automatisch weiterbewegt, bis sie an einem letzten Anschlag 80 anliegt. Die Stifte 70, 72, die in das Plattenbett 14 zurückgezogen wurden, springen dann hoch und wirken mit den Löchern 70' und 72' in der Druckplatte 50 zusammen. Diese Stifte 70, 72 werden vom Mikroprozessor 40 gesteuert und umfassen einen Plattenausrichtmechanismus, der auch eine magnetische oder andere geeignete Einrichtung, die eine genaue Positionierung der Druckplatte 50 auf dem Plattenbett 14 ermöglicht, sein kann.

Der Mikroprozessor 40 identifiziert das Umfangsregister eines jeweiligen Plattenzylinders der Druckmaschine durch den Registerantriebsmechanismus 6 (siehe Fig. 1). Die Registermarken 58 und 59 werden von den Registersensoren 38 und 39 gelesen, so daß die jeweilige Position der Bilder 52A und 52B auf der Druckplatte 50 bekannt ist. Die gewünschten Biegestellen 54, 54' für diese Druckplatte 50 werden dann durch den Mikroprozessor 40 bestimmt; so daß die Genauigkeit des Umfangsregisters in der Maschine gewahrt bleibt. Es kann auch sein, daß während des Prozesses die Bilder 52A und 52B bezüglich der Kanten 55 und 56 der Druckplatte 50 geringfügig schräg erscheinen; diese Schrägstellung kann ebenfalls durch die Sensoren 38, 39 und den Mikroprozessor 40 identifiziert und durch die Wahl der geeigneten Biegestellen 54, 54' korrigiert werden. Alternativ ist es auch denkbar, daß der Plattenzylinder 3 einen Plattenspannmechanismus umfaßt, durch welchen der Schrägverlauf des Plattenzylinders 3 geringfügig reguliert werden kann, um die Schrägstellung des Bildes auf der Druckplatte 50 zu korrigieren. In diesem Fall identifizieren die Sensoren 38, 39 und der Mikroprozessor 40 das Ausmaß der Schrägstellung und senden Steuersignale für die Korrektur der Schrägstellung an den Plattenspannmechanismus.

Die Druckplatte 50 wird dann durch die Stifte 70, 72 bewegt, so daß sich die gewünschten Biegestellen 54' und 54 entlang der Kanten der Auflageflächen 16 und 16' befinden. Die Klemmleisten 46 und 48 werden gesenkt und halten die Plattenkanten fest. Die Biegeschiene 32 wird gesenkt und biegt die Vorderkante der Druckplatte 50, und die Biegeschiene 32' wird gesenkt und biegt die Hinterkante 55 an der Biegestelle 54, wie auf der linken Seite der Fig. 4 gezeigt. Die Klemmleisten 46 und 48 sowie die Biegeschienen 32 und 32' können wieder nach oben bewegt werden. Der Anschlag 80 wird dann gedreht und die abgebogene Druckplatte 50 kann entfernt und auf dem entsprechenden Plattenzylinder der Druckmaschine plaziert zu werden. Vor dem Entfernen der Druckplatte, können die Registersensoren 38, 39 auch den Abstand zwischen der Seite des Bildes 52A und der Seite der Druckplatte 50 bestimmen und diese Information durch den Mikroprozessor 40 dem Registerantriebsmechanismus 6 zuführen, der dann das Seitenmarkenregister für den entsprechenden Plattenzylinder verstellen wird.

Auf diese Weise können alle vier Druckplatten 50 einer Vierfarben-Druckmaschine rasch abgetastet und abgebogen werden, wobei das Umfangs- und Seitenmarkenregister bereits korrigiert sind. Somit sind bei der Inbetriebsetzung der Maschine weniger Regulierungen erforderlich und Makulatur kann vermindert werden. Auch können die Plattenzylinder nach jedem Plattenwechsel erneut auf umfängliche und axiale Nullpositionen gesetzt werden.

Es sollte beachtet werden, daß der Abstand zwischen dem Startanschlag 17C und dem ersten Ende des Plattenbettes (gegenüber dem Ende mit dem Anschlag 80) lang genug sein sollte, um die Platte zu stützen, nachdem diese auf dem Plattenbett 14 plaziert wurde. Somit kann der Abstand eine volle Plattenlänge oder sogar kürzer sein, um noch mehr Raum zu sparen.

In einem weiteren, in Fig. 5 gezeigten Ausführungsbeispiel der vorliegenden Erfindung erfolgt das Biegen vor dem Abtasten. Die Platte ist an den Startanschlägen 17A, 17B und 17C plaziert, die Stifte 17B und 17C ziehen sich zurück und die Platte wird durch den Plattentreiber 15 gegen den Anschlag 80 bewegt. Die Platte wird gebogen, wie oben beschrieben, und die Biegeschienen 32 und 32' werden eingezogen. Der Anschlag 80 wird gesenkt und der Plattentreiber 15 bewegt dann die Platte aus der Vorrichtung 10 heraus. Die Abtastsensoren 20 und 22 tasten die Bilder ab, während die Platte austritt. Bei dieser Ausführung sollten die Registermarken 58 und 59 sich vorzugsweise am anderen Ende der Druckplatte befinden, um mit den Registersensoren 38 und 39 in der oben beschriebenen Weise zusammenzuwirken. Mit dieser Konfiguration kann die Vorrichtung 10 beinahe so klein oder groß sein, wie die Druckplatte selbst. Vorzugsweise ist die gesamte Länge der Vorrichtung 10 nur um ein Achtel länger als die eigentliche Druckplatte. Diese Größe erlaubt es, daß die Platte an den drei Stiften 17A, 17B und 17C die richtige Startposition einnehmen kann, während die Gesamtgröße der Vorrichtung 10 minimiert ist.

Obschon das in Fig. 1 gezeigte Druckwerk für eine Offsetdruckmaschine bestimmt ist, kann die vorliegende Erfindung auch für andere Druckverfahren, bei denen Platten verwendet werden, zweckdienlich sein. Auch versteht es sich von selbst, daß das Druckwerk zwei Plattenzylinder und zwei Gummituchzylinder anstelle eines Gegendruckzylinder umfassen kann, und daß eine Platte eine Vielzahl von Bildern enthalten kann.

### LISTE DER BEZUGSZEICHEN

- 1: Offsetdruckmaschine
- 2: Druckwerk
- 3: Plattenzylinder
- 4: Gummituchzylinder
- 5: Gegendruckzylinder
- 6: Registerantriebsmechanismus
- 7: axialer Spalt
- 10: Plattenabtast- und Plattenbiegevorrichtung
- 11: Träger
- 12: Rahmen
- 14: Plattenbett
- 15: Plattentreiber
- 16: Auflagefläche
- 16': Auflagefläche
- 17A: Startanschlag
- 17B: Startanschlag
- 17B: Startanschlag
- 20: Abtastsensor
- 22: Abtastsensor
- 30: Biegemechanismus
- 32: Biegeschiene
- 32': Biegeschiene
- 34: Gehäuse für Biegeschiene
- 34': Gehäuse für Biegeschiene
- 36: Biegeschiene-Betätigungsorgan
- 36': Biegeschiene-Betätigungsorgan
- 38: Registersensor
- 39: Registersensor
- 40: Mikroprozessor
- 46: Klemmleiste
- 48: Klemmleiste
- 50: Druckplatte
- 52A: Bildbereich
- 52B: Bildbereich
- 54: Biegestelle
- 54': Biegestelle
- 55: Hinterkante der Druckplatte 50
- 56: Vorderkante der Druckplatte 50
- 58: Registermarke
- 59: Registermarke
- 60: Löcher des Plattenbettes 14
- 70: einziehbarer Stift
- 70': Loch in der Druckplatte 50
- 72: einziehbarer Stift
- 72': Loch in der Druckpolatte 50
- 80: letzter oder End-Anschlag

## Patentansprüche

1. Plattenabtast- und Plattenbiegevorrichtung, welche die folgenden Merkmale umfaßt:
ein Plattenbett (14) zum Aufnehmen einer Druckplatte (50);
einen Plattentreiber (15) zum Bewegen der Druckplatte (50) entlang dem Plattenbett (14);
mindestens einen Abtastsensor (20, 22), der zum Abtasten der Dichte eines sich auf der Druckplatte (50) befindlichen Bildes (52A, 52B) über dem Plattenbett (14) angeordnet ist;
mindestens einen Registersensor (38, 39) zum Abtasten der Position des Bildes (52A, 52B) auf der Druckplatte (50);
mindestens eine dem Plattenbett (14) zugehörige Auflagefläche (16, 16') an einer Seite; und
mindestens einen Biegemechanismus (30), der sich zum Biegen der Druckplatte (50) neben der mindestens einen Auflagefläche (16, 16') befindet.

2. Plattenabtast- und Plattenbiegevorrichtung nach Anspruch 1,
**dadurch gekennzeichnet,**
daß ferner ein Mikroprozessor (40) zur Bestimmung einer gewünschten Biegestelle auf der Druckplatte (50) vorgesehen ist.

3. Plattenabtast- und Plattenbiegevorrichtung nach Anspruch 2,
**dadurch gekennzeichnet,**
daß der Mikroprozessor (40) Daten von einem Registerantriebsmechanismus (6) eines Plattenzylinders (3) empfängt.

4. Plattenabtast- und Plattenbiegevorrichtung nach Anspruch 1,
**dadurch gekennzeichnet,**
daß sich zwei Registersensoren (38, 39) zum Abtasten von Registermarken (58, 59) auf der Druckplatte (50) neben dem Plattenbett (14) befinden.

5. Plattenabtast- und Plattenbiegevorrichtung nach Anspruch 1,
**dadurch gekennzeichnet,**
daß der Biegemechanismus (30) eine Biegeschiene (32, 32') umfaßt.

6. Plattenabtast- und Plattenbiegevorrichtung nach Anspruch 1,
**dadurch gekennzeichnet,**
daß der Biegemechanismus (30) eine Biegeschiene (32, 32') und ein Gehäuse (34, 34') für die Biegeschiene umfaßt.

7. Plattenabtast- und Plattenbiegevorrichtung, welche die folgenden Merkmale umfaßt:
ein Plattenbett (14) zum Aufnehmen einer Druckplatte (50);
zwei Abtastsensoren (20, 22), die zum Abtasten der Dichte eines sich auf der Druckplatte (50) befindlichen Bildes (52A, 52B) über dem Plattenbett (14) angeordnet sind;
mindestens einen Registersensor (38, 39) zum Abtasten der Position des Bildes (52A, 52B) auf der Druckplatte (50);
ein dem Plattenbett (14) zugehöriges Paar Auflageflächen (16, 16') an einem Ende;
und einen Biegemechanismus (30), der sich zum Biegen der Hinterkante und der Vorderkante der Druckplatte (50) neben jeder Auflagefläche (16, 16') befindet.

8. Plattenabtast- und Plattenbiegevorrichtung nach Anspruch 7,
**dadurch gekennzeichnet,**
daß ferner ein Mikroprozessor (40) zur Bestimmung einer gewünschten Biegestelle für die Hinterkante und die Vorderkante der Druckplatte (50) vorgesehen ist.

9. Plattenabtast- und Plattenbiegevorrichtung nach Anspruch 7,
**dadurch gekennzeichnet,**
daß der Mikroprozessor (40) Daten von einem Registerantriebsmechanismus (6) eines Plattenzylinders (3) empfängt.

10. Plattenabtast- und Plattenbiegevorrichtung nach Anspruch 7,
**dadurch gekennzeichnet,**
daß sich zwei Registersensoren (38, 39) zum Abtasten von Registermarken (58, 59) auf der Druckplatte (50) neben dem Plattenbett (14) befinden.

11. Plattenabtast- und Plattenbiegevorrichtung nach Anspruch 7,
**dadurch gekennzeichnet,**
daß jeder Biegemechanismus (30) eine Biegeschiene (32, 32') umfaßt.

12. Plattenabtast- und Plattenbiegevorrichtung nach Anspruch 7,
**dadurch gekennzeichnet,**
daß jeder Biegemechanismus (30) eine Biegeschiene (32, 32') und ein Gehäuse (34, 34') für die Biegeschiene umfaßt.

13. Plattenabtast- und Plattenbiegevorrichtung nach Anspruch 7,
**dadurch gekennzeichnet,**
daß sich mindestens einer der beiden Sensoren (38, 39) zwischen dem Paar Auflageflächen (16, 16') befindet.

14. Plattenabtast- und Plattenbiegevorrichtung nach Anspruch 8,
**dadurch gekennzeichnet,**
daß der mindestens eine Registersensor (38, 39) und der Mikroprozessor (40) in der Lage sind, eine Schrägstellung des Bildes (52A, 52B) auf der Druckplatte (50) festzustellen.

## Claims

1. A plate scanner-bending device comprising the following features:
a plate bed (14) for receiving a printing plate (50);
a plate driver (15) for moving the printing plate (50) along the plate bed (14);
at least one scan sensor (20, 22) located above the plate bed (14) for scanning an image (52A, 52B) on the printing plate (50) for density;
at least one register sensor (38, 39) for sensing a position oft he image (52A, 52B) on the printing plate (50);
the plate bed (14) having at least one anvil (16, 16') at one side; and a
at least one bending mechanism (30) located next to the at least one anvil (16, 16') for bending the plate (50).

2. The plate scanner-bending device as recited in claim 1,
**characterized in**
that it further comprises a microprocessor (40) for determining a desired bend location on the printing plate (40).

3. The plate scanner-bending device as recited in claim 2,
**characterized in**
that the microprocessor (40) receives inputs from a register drive mechanism (6) of a plate cylinder (3).

4. The plate scanner-bending device as recited in claim 1,
**characterized in**
that two register sensors (38, 39) are located next to the plate bed (14) for sensing register marks (58, 59) on the printing plate (50).

5. The plate scanner-bending device as recited in claim 1,
**characterized in**
that the bending mechanism (30) comprises a bending bar (32, 32').

6. The plate scanner-bending device as recited in claim 1,
**characterized in**
that the bending mechanism (30) comprises a bending bar (32, 32') and a housing (34, 34') for the bending bar.

7. A plate scanner-bending device comprising the following features:
a plate bed (14) for receiving a printing plate (50);
two scan sensors (20, 22) located above the plate bed (14) for scanning an image (52A, 52B) on the printing plate (50) for density;
at least one register sensor (38, 39) for sensing a position of the image (52A, 52B) on the printing plate (50);
a pair of anvils (16, 16') associated with the plate bed (14) at one side; and
a bending mechanism (30) located next to each of the anvils (16, 16') for bending the trailing edge an the leading edge of the plate.

8. The plate scanner-bending device as recited in claim 7,
**characterized in**
that a microprocessor (40) is provided for determining a desired bend location for the trailing edge and the leading edge of the printing plate (50).

9. The plate scanner-bending device as recited in claim 8,
**characterized in**
that the microprocessor receives inputs from a register drive mechanism (6) of a plate cylinder (3).

10. The plate scanner-bending device as recited in claim 7,
**characterized in**
that two register sensors (38, 39) are located next to the plate bed (14) for sensing register marks (58, 59) on the printing plate (50).

11. The plate scanner-bending device as recited in claim 7,
**characterized in**
that each bending mechanism (30) comprises a bending bar (32, 32').

12. The plate scanner-bending device as recited in claim 7,
**characterized in**
that each bending mechanism (30) comprises a bending bar (32, 32') and a housing (34, 34') for the bending bar.

13. The plate scanner-bending device as recited in claim 7,
**characterized in**
that at least one of the two sensors (38, 39) is located between the pair of anvils (16, 16').

14. The plate scanner-bending device as recited in claim 7,
**characterized in**
that the at least one register sensor (38, 39) and the microprocessor (40) are capable of detecting a skewed position of the image (52A, 52B) on the printing plate (50).

## Revendications

1. Dispositif d'exploration et de pliage de plaques, comprenant les éléments suivants:
une table porte-plaque (14) destinée à recevoir une plaque d'impression (50);
un entraîneur de plaque (15) pour déplacer la plaque d'impression (50) le long de la table porte-plaque (14);
au moins un capteur d'exploration (20, 22) disposé, en vue de l'exploration de la densité d'une image (52A, 52B) se trouvant sur la plaque d'impression (50), au-dessus de la table porte-plaque (14);
au moins un capteur de repérage (38, 39) pour explorer la position de l'image (52A, 52B) sur la plaque d'impression (50);
au moins une surface d'appui (16, 16') faisant partie de la table porte-plaque (14) et disposée sur un côté de celle-ci; et
au moins un mécanisme de pliage (30) se trouvant, en vue du pliage de la plaque d'impression (50), à côté de la surface d'appui (16, 16').

2. Dispositif d'exploration et de pliage de plaques selon la revendication 1, caractérisé en ce qu'un microprocesseur (40) est prévu en outre pour déterminer un point de pliage désiré sur la plaque d'impression (50).

3. Dispositif d'exploration et de pliage de plaques selon la revendication 2, caractérisé en ce que le microprocesseur (40) reçoit des données d'un mécanisme d'entraînement de repérage (6) d'un cylindre porte-plaque (3).

4. Dispositif d'exploration et de pliage de plaques selon la revendication 1, caractérisé en ce que deux capteurs de repérage (38, 39) pour l'exploration de marque de repérage (58, 59) sur la plaque d'impression (50) se trouvent à côté de la table porte-plaque (14).

5. Dispositif d'exploration et de pliage de plaques selon la revendication 1, caractérisé en ce que le mécanisme de pliage (30) comprend une barre de pliage (32, 32').

6. Dispositif d'exploration et de pliage de plaques selon la revendication 1, caractérisé en ce que le mécanisme de pliage (30) comprend une barre de pliage (32, 32') et un carter (34, 34') pour cette barre.

7. Dispositif d'exploration et de pliage de plaques, comprenant les éléments suivants:
une table porte-plaque (14) destinée à recevoir une plaque d'impression (50);
deux capteurs d'exploration (20, 22) disposés, en vue de l'exploration de la densité d'une image (52A, 52B) se trouvant sur la plaque d'impression (50), au-dessus de la table porte-plaque (14);
au moins un capteur de repérage (38, 39) pour explorer la position de l'image (52A, 52B) sur la plaque d'impression (50);
une paire de surfaces d'appui (16, 16') faisant partie de la table porte-plaque (14) et disposée à une extrémité de celle-ci;
et un mécanisme de pliage (30) situé à côté de chaque surface d'appui (16, 16') pour le pliage du bord arrière respectivement du bord avant de la plaque d'impression (50).

8. Dispositif d'exploration et de pliage de plaques selon la revendication 7, caractérisé en ce qu'un microprocesseur (40) est prévu en outre pour déterminer un point de pliage désiré pour le bord arrière et le bord avant de la plaque d'impression (50).

9. Dispositif d'exploration et de pliage de plaques selon la revendication 7, caractérisé en ce que le microprocesseur (40) reçoit des données d'un mécanisme d'entraînement de repérage (6) d'un cylindre porte-plaque (3).

10. Dispositif d'exploration et de pliage de plaques selon la revendication 7, caractérisé en ce que deux capteurs de repérage (38, 39) pour explorer des marques de repérage (58, 59) sur la plaque d'impression (50) se trouvent à côté de la table porte-plaque (14).

11. Dispositif d'exploration et de pliage de plaques selon la revendication 7, caractérisé en ce que chaque mécanisme de pliage (30) comprend une barre de pliage (32, 32').

12. Dispositif d'exploration et de pliage de plaques selon la revendication 7, caractérisé en ce que chaque mécanisme de pliage (30) comprend une barre de pliage (32, 32') et un carter (34, 34') pour cette barre.

13. Dispositif d'exploration et de pliage de plaques selon la revendication 7, caractérisé en ce que l'un au moins des deux capteurs (38, 39) se trouve entre la paire de surfaces d'appui (16, 16').

14. Dispositif d'exploration et de pliage de plaques selon la revendication 8, caractérisé en ce que le capteur de repérage ou les capteurs de repérage (38, 39) et le microprocesseur (40) sont en mesure de constater une position penchée de l'image (52A, 52B) sur la plaque d'impression (50).
